# EUROPEAN PATENT SPECIFICATION

(11) **EP 0 522 704 B1**
(45) Date of publication and mention of the grant of the patent: **20.08.1997**
(21) Application number: 92305036.3
(22) Date of filing: 02.06.1992
(51) Int. Cl.: A23G 1/00, A23G 1/12

(54) **Food modifier and process for making same**
Nährungsmodifiziermittel und Herstellungsverfahren
Agent modificateur d'aliment et procédé de fabrication

(30) Priority: 07.06.1991 US 712241; 20.08.1991 US 747815
(43) Date of publication of application: 13.01.1993
(73) Proprietor: CPC INTERNATIONAL INC., Englewood Cliffs New Jersey 07632 (US)
(72) Inventor: Loh, Jimbay, Peekskill, New York 10566 (US); Trumbetas, Jerome, Tarrytown, New York 10591 (US); Palmer, David H., Selden, New York 11784 (US); Fitch, Mark D., Stony Brook, New York 11790 (US)
(74) Representative: Stevens, Ian Edward

(56) References cited:
- EP-A- 0 276 548
- EP-A- 0 397 247
- EP-A- 0 398 867
- GB-A- 1 488 305
- GB-A- 2 033 721
- US-A- 3 014 802
- US-A- 4 235 939
- US-A- 4 880 655
- US-A- 4 925 695
- H. FINCKE ET AL. 'handbuch der kakaoerzeugnisse' 1965 , SPRINGER-VELAG , BERLIN/HEIDELBERG/NEW YORK * page 256, paragraph 6 - page 257, paragraph 4 * * page 179, paragraph 4 *
- S. T. BECKETT 'moderne schokoladentechnologie' 1990 , B. BEHR'S VERLAG , HAMBURG * page 69 - page 71 * * page 225 - page 226 *
- H. FINCKE ET AL. 'handbuch der kakaoerzeugnisse' 1965 , SPRINGER-VERLAG , BERLIN/HEIDELBERG/NEW YORK page 179, 256-257

## Description

The present invention relates to chocolate food products which have been modified in their properties by the inclusion of an aqueous sugar solution of micro-particularized cocoa. The modified properties include a fat-like mouthfeel, a flavor profile which resembles refined chocolate, better color, viscosity control, and stabilization. Additionally, the invention relates to methods of making the aqueous sugar/cocoa dispersion and incorporating the dispersion in chocolate products.

### DESCRIPTION OF THE PRIOR ART

The food art is replete with disclosures of food modifiers, particularly as substitutes for fat, which disclose small particles of a carbohydrate or protein material which serves to simulate the water-in-oil emulsion properties of a fat or cream.

German Patent Application 2345806 (published 3/20/75) discloses fine grinding of a bran, such as wheat, corn, rice and barley to a particle size between 0 and 50 microns, preferably 0 to 20 microns, and then using such product as a filler in low calorie foods.

U.S. Patent Nos. 4,143,174 and 4,209,503 to Shah et al. show colloidal protein particles having an average particle size of less than 10 microns, preferably less than 5 microns, being used as a food modifier for stability, thickening, clouding, gelling and viscosity control purposes.

U.S. Patent No. 3,023,104 to Battista discloses microcrystalline cellulose at I to 300 microns, preferably 1 micron, as a fat substitute. Tiemstra (3,573,058) adds a hydrocolloid, such as sodium alginate to Battista's product to improve its storage stability.

U.S. Patent No. 4,103,037 to Bodor et al. disclose small particles of protein (below 5 microns) in a low fat spread. In a later patent (4,591,507), Bodor et al. use hydrated starch, from corn, wheat, oats and rice, as a partial fat replacement in margarine to improve the stability and spattering behavior of the margarine. Small particles of hydrated rice starch (8 to 15 microns after swelling) are used for this purpose in margarine.

U.S. Patent No. 4,305,964 to Moran et al. shows gelled water beads at 5 to 10 microns, preferably coated with a layer of oil, in an artificial cream. Gelled spheres containing hydrocolloid at 10 to 20 microns are shown by Moran et al. (4,305,970), as well as fine fat particles at 0.1 to 2 microns in a dispersed phase of 10 to 40 microns (4,515,825).

U.S. Patent No. 4,734,287 to Singer et al. discloses coagulated proteins under heat and shear conditions shaped into spheroidal particles of 0.1 to 2 microns to create the creamy mouthfeel characteristic of fats and oils. This same technique is shown in Singer et al.'s later patent (4,911,946) applied to any carbohydrate (starches, gums, cellulose) to achieve this same creamy mouthfeel.

None of the above patents discloses or suggests the micromilling of cocoa. However, a "Dyno-mill" sales brochure (published June 1986) by Glen Mills Inc. of Maywood, New Jersey discloses that the "Dyno-mill" machine can be used for extremely fine (0.1 micron) wet milling of various food ingredients. Ingredients such as chocolate sauce, imitation chocolate, nut cream, fat/sugar mixtures, soya flour, coffee, flavoring, etc. are disclosed.

Cocoa can be milled at water levels above 70%, but the micromilled cocoa cannot be used in bakery applications due to its high water content. Bakery products require a moisture content in the micromilled cocoa of below 50%, typically 25 to 35%. However, at these low water levels the Dyno-Mill does not operate due to seizing of the machine.

It would be desirable if a new form of microparticularized cocoa paste could be produced having a low water content, low fat and improved flavor.

It would be desirable to produce a microparticularized cocoa paste having an intense chocolate flavor similar to "conched" chocolate. ("Conching" is the kneading and stirring of a warm cocoa mass over 6-38 hours to develop fine chocolate flavor to its optimum.)

Thus, an aspect of this invention is to drastically improve various functional characteristics of chocolate products, particularly bakery products that normally contain chocolate.

Another aspect of this invention is to produce virtually fat free (less than 1%) chocolate bakery products, such as 99% fat-free icings and frostings.

A further aspect of this invention is that chocolate products, whether they contain their full complement of fat, or are reduced in fat content, could be given new functional properties such as better chocolate flavor, better color, better thickening, and better stability.

### SUMMARY OF THE INVENTION

This invention is founded on the discovery that new functional properties can be given to a wide array of chocolate products by incorporating an aqueous sugar paste containing microparticles of cocoa dispersed in the paste. The colloid-like cocoa paste has improved food modifying properties of intense chocolate flavor similar to "conched" chocolate, fat-like mouthfeel, thickener, viscosity control, and stability. The paste comprises hydrated microparticles of cocoa wherein 100% of the particles have a particle size of 0.1 to 20 microns, preferably 0.1 to 10 microns, and preferably having an average mean particle size of 2 to 7 microns. The hydrated microparticles of cocoa are dispersed uniformly throughout an aqueous sugar paste, which contains from 10 to 30% of said cocoa, from 15 to 75% of sugar, and from 20 to 55% of water. The paste typically has an Aw (water activity) of 0.80 to 0.90, preferably 0.84 to 0.88 and most preferably about 0.86. The extended shelf stability of the paste enables the product to be distributed and sold as a food modifier.

The paste can be made from commercial cocoa powder which has an average particle size of about 75 microns by forming a slurry of 10 to 30% (by wt.) cocoa, 15 to 75% sugar, and 20 to 55% water, said sugar and water being present in the slurry as a 15 to 75% sugar solution, grinding the cocoa particles in the slurry to a particle size wherein 100% of the particles are between 0.1 to 20 microns, preferably 0.1 to 10 microns, and preferably have an average mean particle size of 2 to 7 microns thus forming a micromilled cocoa paste. The paste can then be added to a chocolate bakery product in an amount effective to modify the functional properties of the product.

The aqueous liquid may simply be water, but is preferably water which contains a protein material. Skim milk, low fat milk, or condensed skim milk are suitable aqueous liquids which contain protein. If fat-reduction is not important, whole milk or milk which contains fat may be used. Of course, milk solids, such as non-fat milk solids, skim milk solids, casein gelatin, egg whites, or soy protein may be added to the aqueous liquid to provide the protein source. Any edible protein containing material may be added.

### DETAILED DESCRIPTION OF THE INVENTION

The paste is characterized by the following particle size distribution for the cocoa particles which are dispersed in the aqueous sugar paste.

| **Microns** | **% By Weight** |
|---|---|
| <2 | 5-25% |
| <10 | 80-95% |
| >10<20 | 5-20% |

Typically, less than 20% of the particles are between 10 and 20 microns, less than 25% are between 0.1 and 2 microns, and at least 75% are between 2 and 10 microns.

While the above particle size distribution is effective to give the food-modifying results of this invention, it is preferred that 100% of the cocoa particles be reduced to a size of between 0.1 and 10 microns. This size gives the best results relative to a mouthfeel which approaches fat-like properties and a "conched" chocolate flavor.

Commercial cocoa powder at an average particle size of above 20 microns and typically 75 microns can be wet-milled in the presence of sugar and water in a "Dyno-Mill". Any cocoa powder can be used ranging in fat content from about 0.1 to 26% fat. The Dyno-Mills are manufactured by Willy A. Bachofen AG and can be obtained in the United States through Glen Mills Inc., 203 Brookdale Street, Maywood, New Jersey 07607. The Dyno-Mill grinds the food ingredient in a liquid base (15-75% aqueous sugar syrup) to an extremely fine particle size and disperses the finely ground particles within the liquid medium into a homogenous paste. The cocoa sugar-water slurry to be processed is pumped through a horizontal chamber containing ceramic (zirconium oxide) beads at 1.7 to 2.0 mm. An agitation shaft with rotor discs moves the beads at great speed impacting them millions of times against the process solids. The shearing forces generated by this action reduce the cocoa solids to between 0.1 and 20 microns with 75 to 80% of the cocoa particles between 2 and 10 microns. This creates a uniform dispersion of the small particles in the sugar-water paste. The paste is discharged continuously while the beads are retained in the Dyno Mill by a "dynamic separator" which forms an adjustable gap that holds the ceramic beads in the machine while allowing the cocoa paste to exit.

Efforts to wet-mill the cocoa with a liquid base of 35-65% water or roughly below a 1:2 ratio of cocoa:water met with no success due to seizing of the Dyno-Mill. The strong water absorption characteristics of the cocoa absorb all the water present to form a viscous mass which cannot be ground. This problem can be solved employing sufficient sugar in the water base to have a 15-75% sugar solution. The sugar syrup thus prevents the water from being absorbed by the cocoa during the wet-milling operation and results in a unique paste being produced which has many varied and desired functional properties.

The range of ingredients for forming the slurry which is pumped to the Dyno Mill is 10-30% (by wt.) for the cocoa, 15-75% for the sugar and 20-55% for the water. A preferable range is 20-25% (by wt.) cocoa, 40-50% sugar, and 25-35% water. The ratio for the sugar:water mixtures in parts by weight is between 1:2 and 3:1, with between 2:1.5 and 2.5:1.5 being preferred.

The aqueous liquid may be milk or any other protein containing aqueous liquid. In the case where fat reduction is not important to the end product, the milk may be whole milk or dry whole milk solids. In most cases fat reduction is important, so it is preferable to use milk having a reduced fat content, such as skim milk, low fat milk, condensed skim milk, or non-fat milk solids. When dry milk solids, preferably low fat milk solids, are added to the aqueous liquid, it may be used at 0.5 to 10% level, preferably 1-5%, and most preferably 1-3%. Instead of milk solids, casein, gelatin, egg white or soy protein may be used.

The wet-milled paste of sugar, water and micromilled cocoa has truly unexpected functional properties never before observed in a sugar/water paste of cocoa particles having a size above 20 microns. The consistency of the paste material is altered drastically so that it has unusual thickening properties. The flavor profile changes unexpectedly to a refined chocolate flavor similar to that achieved by "conching" cocoa with cocoa butter. Unexpectedly, the mouthfeel of the paste is vastly improved giving the perception and sensation of chocolate products which contain a high level of cocoa fat-like or cream-like. Moreover, the paste is exceedingly stable to various storage conditions. The paste remains soft (spoonable) under freezer conditions. Ice crystal growth under freezer temperatures is prevented. Crystallization of sugar is inhibited. The paste has increased hydrophobicity and will not dissipate in an aqueous system unless mechanical force is used. If the particles are dispersed in an aqueous system, they will remain suspended and will not settle.

The paste is particularly useful in formulating low fat, or no fat chocolate flavored cakes and bakery products to give a full fat eating quality to the product. These cakes and bakery products have a moisture content below 45% and an Aw of 0.86 to 0.89. A paste having a moisture content above 50% or an Aw above 0.90 cannot be added to most baked products. A paste having an Aw of below 0.80 cannot be added to most baked products. However, for baked products such as cookies, a paste having an Aw below 0.80, say 0.75-0.80, can be used. The micromilled cocoa particles are transformed from an inert particle into a fat-like material which imparts a creamy, smooth mouthfeel to the product. The paste also provides a darker color, increased viscosity and much better flavor release.

An immediate commercial application of the micromilled cocoa paste is the area of low fat and no fat icings for cakes. Essentially, the icings are fat systems that are sweetened with sugar. The icings are made low fat by removal of the fat leaving a sugar water emulsion which must be thickened with gum or starch. Obviously, this leaves a stringy, thick icing devoid of any fat-like properties. Moreover, these commercial low-fat icings still have 5-10% fat, typically 6% fat.

Addition of the micromilled cocoa paste of this invention to these low fat icings will drastically improve the mouthfeel close to a full-fat counterpart. The paste may be added in the range of 10-50% while a preferred range is 20-30% of the total icing.

A suitable no-fat icing having less than 1% fat using the micromilled cocoa paste can be made from the following starch base icing formula:

| **Ingredient** | **% Range** | **Preferred %** |
|---|---|---|
| water | 25-50 | 30-40 |
| sugar | 45-70 | 52-62 |
| starch | 5-10 | 6-8 |
| gum | 0.05-0.3 | 0.15-0.25 |
| salt | 0.2-0.4 | 0.3-0.4 |
| preservative | 0.1-0.2 | 0.1-0.2 |
| color | --- | --- |

The only essential ingredients for the icing are the starch and the sugar. The starch may be any uncooked starch, including tapioca, wheat or corn starch. The sugar is sucrose, invert sugar or a combination of invert and sucrose. The gum ingredient can be any hydrocolloid gum. Agar agar, gelatin, locust beam gum, or carrageenan are preferred with agar agar most preferred. Any food approved preservative, including sorbate can be used. Any food approved color, including titanium dioxide may be used. The finished icing has an Aw of 0.84 to 0.88, preferably 0.85 to 0.86 and can be easily combined with a cake having an Aw of 0.86 to 0.88 with superior stability results at the interface. Aside from icings and frostings, chocolate baked goods having desirable texture and organoleptic characteristics may be prepared using the aqueous cocoa/sugar dispersion of this invention. Baked goods typically utilize substantial quantities of triglycerides. These triglycerides such as butter and shortenings have high caloric content. Consumers, for various reasons, may wish to reduce their triglyceride intake. The dispersion is a particularly desirable component of baked goods having a reduced fat content, such as low-fat cake batters, cookies, chocolate chips and brownies. The dispersion of this invention will be utilized at a level of from 10 to 80% by weight. Of course, the paste dispersion may also be used in addition to the full shortening component and still give new functional properties to the product.

The dispersion of this invention is also directed to reduced fat, and no-fat candies and confections having increased nutritional balance and novel organoleptic and mouthfeel characteristics. The dispersion is an important component of low fat, or no fat chocolate having desirable organoleptic characteristics. Confections are characteristically comprised primarily of sugars. By sugars is meant nutritive sugars such as nutritive mono, di and poly-saccharides such as sucrose, dextrose, levulose and starch syrups such as sucrose, dextrose, levulose and starch syrups such as corn syrups of varying composition including dextrin, maltose and dextrose, and low caloric sweeteners such as polyglucose, xylitol, as well as artificial sweetener agents such as saccharine and aspartame. Typically 10 to 80% by weight of the dispersion composition of this invention may be used in confections.

The cocoa/sugar/water paste may be dried to a powder by drum-drying or spray-drying. Typically, a cocoa:sugar:water ratio of 15:60:25 was micromilled with an ingredient which will aid dispersion and hydration after drying. Lecithin can be used for this purpose at a level (dry basis) of 0.01 to 0.10%, preferably 0.05%. The paste is diluted under high shear in an homogenizer to a pumpable dispersion of below 30% total solids content, preferably 20-30%. This dispersion is suitable for spray-drying in a Niro spray-dryer manufactured by Niro Atomizer Copenhagen, Denmark at an outlet temperature of 75°C and an inlet temperature of 135°C. The powder is a free-flowing, readily dispersible powder with improved smoothness and flavor. The powder can be used to improve full fat and low fat products such as a dry beverage mix, instant dessert mix, and confections.

This invention will now be described by reference to specific examples. Those skilled in the art of chocolate products will readily see the broad application of the micro-particularized cocoa paste to a wide array of food products.

### EXAMPLE 1

Approximately 31 lbs. (14.06 kg) of water and ice at 35° to 40°F (1.7 to 4.4°C) was placed in a large bowl. Into this water, 45 lbs. (20.41 kg) of sugar was dissolved with stirring, to form a sugar solution. A dry blend of 22 lbs. (9.98 kg) commercial cocoa powder (having a particle size of about 75 microns and a fat content of 10-12 fat) was then made with 2 lbs. (0.91 kg) of dry skim milk solids. The cocoa-milk blend was then added to the sugar solution and mixed with an agitator for 10 minutes to form a pumpable slurry.

The grinding took place in a "Dyno-Mill" KD-5 (S.N. 730,711) wet-mill grinder available from Glen Mills Inc. of 203 Brookdale Street, Maywood, New Jersey 07607. The cocoa slurry is pumped through a horizontal grinding chamber filled to 85% capacity with ceramic (zirconium dioxide) beads. Inside the grinding chamber, a rapid rotating shaft (1500 rpm) fitted with specially designed discs drove the beads to rotate at an even more rapid rate. The high shear and impact force of millions of beads pulverized the cocoa particles which were subsequently discharged through a gap or opening in a separator for the beads. The grinding was done at one atmosphere of pressure and a temperature of 50° to 60°C. A uniform and smooth paste with an average mean particle size of between 2 and 7 microns was produced by the Dyno-Mill.

Analysis of the cocoa particles showed a distribution between 0.1 and 20 microns with at least 75% of the particles between 2 and 10 microns. About 10% of the particles were below 2 microns and about 10% above 10 microns. No particles were above 20 microns. The paste had an Aw of 0.86 making it ideal for addition or combination with bakery products which have an Aw of 0.86 to 0.88.

After micromilling in the Dyno-Mill, the normally inert cocoa particles were found to exhibit fat-like or cream-like properties. The paste dispersion imparts a creamy, smooth mouthfeel and can be used as a fat mimetic to partially or fully replace fat. It has a darker color, increased viscosity and better flavor release (chocolate flavor profile similar to a "conched" chocolate) when blended into baked chocolate products, as well as icings and fillings for these bakery products.

Moreover, the paste is shelf-stable, does not solidify (even in a freezer), is spreadable (similar to margarine), has a very shiny or wet look (desirable in chocolate), prevents ice crystal growth, prevents crystallization of sugar in a supersaturated solution, will not disperse in an aqueous system without mechanical force, and does not settle out when blended into an aqueous or milk beverage.

### EXAMPLE 2

When 25 lbs. (11.33 kg) of the same commercial cocoa used in Example 1 was added to 50 lbs. (22.68 kg) of water and agitated for 10 minutes and pumped into the Dyno-Mill, no product was obtained due to plugging of the mill. It appeared that the cocoa-water slurry in the Dyno-Mill became too thick and viscous to be workable. This is believed to be due to the tremendous water absorption properties of the cocoa particles as they are ground to below 10 microns.

At levels of 25 lbs. (11.34 kg) cocoa and 75 lbs. (34.02 kg) water, it was possible to obtain a paste product in the Dyno-Mill, but at these levels of water (Aw above 0.9), the paste could not be used in cake and bakery food applications since the moisture level and water activity was too high.

### EXAMPLE 3

A non fat icing was prepared using the following ingredients.

| **Ingredient** | **lbs (kg)** |
|---|---|
| Agar Agar | 2.3 (1.04) |
| Tapioca Starch | 109.0 (49.44) |
| Invert Sugar | 245.0 (111.13) |
| Water | 439.0 (199.13) |
| Granulated Sugar | 600.0 (272.16) |
| Sorbate | 2.1 (0.45) |
| Titanium Dioxide | 0.3 (0.14) |
| Pea Fiber | 4.0 (1.81) |
| Non-fat Milk Solids | 4.0 (1.81) |
| Vanillin | 0.2 (0.09) |

The above ingredients, except for the pea fiber, milk solids, and vanillin, were simply mixed into a big vat or steam kettle. The mixture was cooked for about 10 minutes until a temperature of 210°F (98.9°C) was reached. The mixture was then allowed to cool down to 160 °F (71.1°C). This took about 20 minutes. The icing was then pumped into pails and placed in a refrigerator.

The no fat icing was prepared by using a Glenn 340 planetary head mixer for mixing the various ingredients together. About 200 lbs (90.72 kg) of the paste from Example 1 was placed in the bottom of the planetary head mixer bowl. The 8.2 lbs (3.72 kg) of pea fiber, non-fat milk solids and vanillin (which act as dry mix stabilizers and flavor) were placed on top of the Example 1 paste. Then 400 lbs (181.44 kg) of the above agar-starch icing was added to the bowl. The entire mixture was then mixed for 3-5 minutes at 75 tpm.

The icing had a fat content under 1%. It had an Aw of 0.855 making the icing an ideal spread for a cake crust (which has an Aw of 0.86 to 0.88). Moreover, it had the same attributes of a conventional full fat icing. The icing has a creamy, smooth mouthfeel similar to a full fat icing. It has dramatic stability improvement. The icing is shelf-stable at room temperature for at least fourteen (14) days. It is spoon-spreadable onto a cake and has a darker more shiny, chocolate color.

## Claims

1. A micromilled cocoa paste composition possessing improved food modifying properties for chocolate products which comprises hydrated microparticles of cocoa wherein 100% of these particles have a particle size of 0.1 to 20 microns, said microparticles of cocoa being dispersed in an aqueous sugar solution, and which contains from 10 to 30% of said cocoa, from 15 to 75% of sugar, and from 20 to 55% of water.

2. A composition according to claim 1, wherein the hydrated cocoa particles have an average mean particle size of 2 to 7 microns.

3. A composition according to claim 1 or claim 2, wherein the aqueous sugar solution contains milk solids.

4. A composition according to any one of claims 1 to 3, wherein the cocoa paste comprises 1 to 5% non-fat milk solids, 10 to 30% cocoa, 15 to 75% sugar, and 25 to 55% water and has an Aw of 0.80 to 0.90.

5. A composition according to any one of claims 1 to 4, wherein the cocoa paste comprises 1 to 3% skim milk solids, 20 to 25% cocoa, 40 to 50% sugar, and 25 to 35% water and has an Aw of 0.80 to 0.90.

6. A composition according to any one of claims 1 to 5, wherein the microparticles of cocoa are between 0.1 and 10 microns.

7. A composition according to any one of claims 1 to 6, having an Aw of 0.80 to 0.86 which has extended shelf stability and is suitable for use as a food modifier in chocolate products.

8. A chocolate product comprising an amount of a composition according to any one of claims 1 to 7 effective to modify the functional properties of the chocolate product.

9. A chocolate product according to claim 8, which is a low-fat icing containing sugar, water and a thickener.

10. A chocolate product according to claim 8, which is a low-fat icing containing 25 to 50% water, 5 to 10% starch and 45 to 70% water.

11. A chocolate product according to claim 10, wherein the low-fat icing comprises 30-40% water, 52-62% sugar, 5-10% tapioca starch and 0.05-3% hydrocolloid gum.

12. A chocolate product according to claim 11, wherein the tapioca starch is 6-8% and the hydrocolloid gum is 0.15-0.25 agar agar.

13. A process for improving the functional properties of cocoa powder which comprises:
forming a slurry of 10-30% cocoa, 15-75% sugar and 20-55% aqueous liquid, said sugar and aqueous liquid being present in the slurry as a sugar solution;
grinding the hydrated cocoa particles in the slurry to a particle size wherein 100% of the particles are between 0.1 and 20 microns thus forming a cocoa paste;
said cocoa paste being suitable as a food modifier for a chocolate food product.

14. A process according to claim 13, wherein the hydrated cocoa particles have an average mean particle size of 2 to 7 microns.

15. A process for production of chocolate food product, wherein a cocoa paste prepared by a process according to claim 13 or claim 14 is added to the chocolate food product in an amount effective to modify the functional properties of the chocolate food product.

16. A process according to claim 15, wherein the slurry contains 20-25% cocoa, 40-50% sugar, and 25-35% aqueous liquid and the chocolate food product is an icing.

17. A process according to claim 16, wherein the icing is a low-fat icing containing sugar, water and a thickener.

18. A process according to claim 17, wherein the icing is a low-fat icing containing 25-50% water, 5-10% starch and 45-70% sugar.

19. A process according to claim 18, wherein the low-fat icing comprises 0.05-0.3% of a hydrocolloid gum.

20. A process according to claim 19, wherein the hydrocolloid is agar agar.

21. A process according to any one of claims 16 to 20, wherein the low-fat icing comprises 30-40% water, 52-62% sugar, 6-8% tapioca starch, 01.15-0.25 agar agar, 0.3-0.4% salt, 0.1-0.2% sorbate, and color.

22. A process for producing a 99% fat-free chocolate icing comprising:
dissolving sufficient sugar in water to form a sugar solution of 15 to 75%.
forming a slurry of 1 part (by wt) cocoa powder and 3-5 parts sugar solution, said slurry containing 1-5% non-fat milk solids;
milling the slurry to obtain a cocoa paste having hydrated cocoa particles wherein 100% of the particles are of between 0.1 to 20 microns and an Aw of 0.83 to 0.90;
providing a low-fat icing mix of 25-50% water, 45-70% sugar, 5-10% starch and 0.05 to 0.3% agar agar;
mixing 1 part of the cocoa paste with 1-3 parts of said icing mix to obtain an icing with less than 1% fat, said icing having an Aw of about 0.84 to 0.88.

23. A process according to claim 22, wherein the hydrated cocoa particles have an average mean particle size of 2-7 microns.

24. A process according to claim 22 or claim 23, wherein the slurry to be wet-milled comprises about 2% skim milk solids, about 22% cocoa powder, about 45% sugar and about 31% water; the milled slurry paste has an Aw of about 0.86, and the low-fat icing comprises about 35% water, about 57% sugar, about 7% starch, about 0.2% agar agar, about 0.4% salt, and about 0.2% preservative, said icing having an Aw of 0.85 to 0.86.

## Patentansprüche

1. Feinstgemahlene, verbesserte lebensmittelmodifizierende Eigenschaften besitzende Kakaomassenzusammensetzung für Schokoladenerzeugnisse, die hydrierte Kakao-Mikroteilchen umfaßt, wobei 100 % dieser Teilchen eine Teilchengröße von 0,1 bis 20 Mikrometern haben, wobei die genannten Kakao-Mikroteilchen in einer wässerigen Zuckerlösung dispergiert sind, und die zwischen 10 % und 30 % des genannten Kakaos, zwischen 15 % und 75 % Zucker und zwischen 20 % und 55 % Wasser enthält.

2. Zusammensetzung nach Anspruch 1, wobei die hydrierten Kakaoteilchen eine durchschnittliche mittlere Teilchengröße von 2 bis 7 Mikrometern haben.

3. Zusammensetzung nach Anspruch 1 oder Anspruch 2, wobei die wässerige Zuckerlösung Milchbestandteile enthält.

4. Zusammensetzung nach einem der Ansprüche 1 bis 3, wobei die Kakaomasse 1 % bis 5 % fettlose Milchbestandteile, 10 % bis 30 % Kakao, 15 % bis 75 % Zucker und 25 % bis 55 % Wasser umfaßt und eine Aw von 0,80 bis 0,90 hat.

5. Zusammensetzung nach einem der Ansprüche 1 bis 4, wobei die Kakaomasse 1 % bis 3 % Magermilchbestandteile, 20 % bis 25 % Kakao, 40 % bis 50 % Zucker und 25 % bis 35 % Wasser umfaßt und eine Aw von 0,80 bis 0,90 hat.

6. Zusammensetzung nach einem der Ansprüche 1 bis 5, wobei die Kakao-Mikroteilchen zwischen 0,1 und 10 Mikometern groß sind.

7. Zusammensetzung nach einem der Ansprüche 1 bis 6 mit einer Aw von 0,80 bis 0,86, die eine verlängerte Lagerbeständigkeit hat und sich zur Verwendung als Lebensmittelmodifizierer in Schokoladenerzeugnissen eignet.

8. Schokoladenerzeugnis umfassend eine Menge einer Zusammensetzung nach einem der Ansprüche 1 bis 7, die zum Modifizieren der Funktionseigenschaften des Schokoladenerzeugnisses wirksam ist.

9. Schokoladenerzeugnis nach Anspruch 8, das eine Zucker, Wasser und ein Verdickungsmittel enthaltende fettarme Überzugsmasse ist.

10. Schokoladenerzeugnis nach Anspruch 8, das eine 25 % bis 50 % Wasser, 5 % bis 10 % Stärke und 45 % bis 70 % Wasser enthaltende fettarme Überzugsmasse ist.

11. Schokoladenerzeugnis nach Anspruch 10, wobei die fettarme Überzugsmasse 30 - 40 % Wasser, 52 - 62 % Zucker, 5 - 10 % Tapiokastärke und 0,05 - 3 % hydrokolloides Gummi umfaßt.

12. Schokoladenerzeugnis nach Anspruch 11, wobei der Tapiokastärkeanteil 6 - 8 % beträgt und das hydrokolloide Gummi 0,15 bis 0,25 Agar-Agar ist.

13. Verfahren zum Verbessern der Funktionseigenschaften von Kakaopulver, das folgendes umfaßt: Formen eines Breis aus 10 - 30 % Kakao, 15 - 75 % Zucker und 20 - 55 % wässeriger Flüssigkeit, wobei der genannte Zucker und die genannte wässerige Flüssigkeit als eine Zuckerlösung in dem Brei vorhanden sind; Kahlen der hydrierten Kakaoteilchen in dem Brei auf eine Teilchengröße, wobei 100 % der Teilchen eine Größe zwischen 0,1 und 20 Mikrometern haben, und dadurch Formen einer Kakaomasse; wobei die genannte Kakaomasse als ein Lebensmittelmodifizierer für ein Schokoladen-Lebensmittelerzeugnis geeignet ist.

14. Verfahren nach Anspruch 13, wobei die hydrierten Kakaoteilchen eine durchschnittliche mittlere Teilchengröße von 2 bis 7 Mikrometern haben.

15. Verfahren zur Herstellung eines Schokoladen-Lebensmittelerzeugnisses, wobei eine durch ein Verfahren nach Anspruch 13 oder Anspruch 14 zubereitete Kakaomasse in einer Menge, die wirksam ist, um die Funktionseigenschaften des Schokoladen-Lebensmittelerzeugnisses zu modifizieren, dem Schokoladen-Lebensmittelerzeugnis zugefügt wird.

16. Verfahren nach Anspruch 15, wobei der Brei 20 - 25 % Kakao, 40 - 50 % Zucker und 25 - 35 % wässerige Flüssigkeit enthält und das Schokoladen-Lebensmittelerzeugnis eine Überzugsmasse ist.

17. Verfahren nach Anspruch 16, wobei die Überzugsmasse eine Zucker, Wasser und ein Verdickungsmittel enthaltende fettarme Überzugsmasse ist.

18. Verfahren nach Anspruch 17, wobei die Überzugsmasse eine 25 - 50 % Wasser, 5 - 10 % Stärke und 45 - 70 % Zucker enthaltende fettarme Überzugsmasse ist.

19. Verfahren nach Anspruch 18, wobei die fettarme Überzugsmasse 0,05 - 0,3 % eines hydrokolloiden Gummis aufweist.

20. Verfahren nach Anspruch 19, wobei das Hydrokolloid Agar-Agar ist.

21. Verfahren nach einem der Ansprüche 16 bis 20, wobei die fettarme Überzugsmasse 30 - 40 % Wasser, 52 - 62 % Zucker, 6 - 8 % Tapiokastärke, 01,15 - 0,25 Agar-Agar, 0,3 - 0,4 % Salz, 0,1 - 0,2 % Sorbat und Farbstoff umfaßt.

22. Verfahren zum Herstellen einer 99 % fettfreien Schokoladen-Überzugsmasse umfassend Auflösen von ausreichend Zucker in Wasser zum Formen einer 15- bis 75 prozentigen Zuckerlösung; Formen eines Breis aus 1 Teil (gewichtsmäßig) Kakaopulver und 3 - 5 Teilen Zuckerlösung, wobei der genannte Brei 1 - 5 % fettlose Milchanteile enthält; Mahlen des Breis, um eine Kakaomasse mit hydrierten Kakaoteilchen, wobei 100 % der Teilchen eine Größe zwischen 0,1 und 20 Mikrometern haben, und einer Aw von 0,83 bis 0,90 zu erhalten; Vorsehen einer fettarmen Überzugsmassenmischung aus 25 - 50 % Wasser, 45 - 70 % Zucker, 5 - 10 % Stärke und 0,05 - 0,3 % Agar-Agar; Mischen eines Teils der Kakaomasse mit 1 - 3 Teilen der genannten Überzugsmassenmischung, um eine Überzugsmasse mit höchstens 1 % Fett zu erhalten, wobei die genannte Überzugsmasse eine Aw von etwa 0,84 bis 0,88 hat.

23. Verfahren nach Anspruch 22, wobei die hydrierten Kakaoteilchen eine durchschnittliche mittlere Teilchengröße von 2 - 7 Mikrometern haben.

24. Verfahren nach Anspruch 22 oder Anspruch 23, wobei der naß zu mahlende Brei etwa 2 % Magermilchbestandteile, etwa 22 % Kakaopulver, etwa 45 % Zucker und etwa 31 % Wasser aufweist, die gemahlene Breimasse eine Aw von etwa 0,86 hat und die fettarme Überzugsmasse etwa 35 % Wasser, etwa 57 % Zucker, etwa 7 % Stärke, etwa 0,2 % Agar-Agar, etwa 0,4 % Salz und etwa 0,2 % Konservierungsmittel umfaßt, wobei die genannte Überzugsmasse eine Aw von 0,85 bis 0,86 hat.

## Revendications

1. Composition de pâte de cacao pulvérisée possédant des propriétés améliorées de modificateur alimentaire pour des produits au chocolat qui comprend des micro-particules hydratées de cacao dans laquelle 100 % de ces particules ont une granulométrie de 0,1 à 20 micromètres, lesdites micro-particules de cacao étant dispersées dans une solution aqueuse sucrée, et qui contient de 10 à 30 % dudit cacao, de 15 à 75 % de sucre et de 20 à 55 % d'eau.

2. Composition selon la revendication 1, dans laquelle les particules de cacao hydratées ont une granulométrie moyenne de 2 à 7 micromètres.

3. Composition selon la revendication 1 ou la revendication 2, dans laquelle la solution aqueuse sucrée contient des matières solides du lait.

4. Composition selon l'une quelconque des revendications 1 à 3, dans laquelle la pâte de cacao comprend 1 à 5 % de matières solides non grasses du lait, 10 à 30 % de cacao, 15 à 75 % de sucre et 25 à 55 % d'eau et a une activité aqueuse de 0,80 à 0,90.

5. Composition selon l'une quelconque des revendications 1 à 4, dans laquelle la pâte de cacao comprend 1 à 3 % de matières solides de lait écrémé, 20 à 25 % de cacao, 40 à 50 % de sucre et 25 à 35 % d'eau et a une activité aqueuse de 0,80 à 0,90.

6. Composition selon l'une quelconque des revendications 1 à 5, dans laquelle les micro-particules de cacao sont comprises entre 0,1 et 10 micromètres.

7. Composition selon l'une quelconque des revendications 1 à 6, ayant une activité aqueuse de 0,80 à 0,86 qui a une stabilité de stockage prolongée et est appropriée pour une utilisation en tant que modificateur alimentaire dans des produits au chocolat.

8. Produit au chocolat comprenant une quantité d'une composition selon l'une quelconque des revendications 1 à 7 efficace pour modifier les propriétés fonctionnelles du produit au chocolat.

9. Produit au chocolat selon la revendication 8, qui est un nappage à faible teneur en matières grasses contenant du sucre, de l'eau et un épaississant.

10. Produit au chocolat selon la revendication 8, qui est un nappage à faible teneur en matières grasses contenant 25 à 50 % d'eau, 5 à 10 % d'amidon et 45 à 70 % d'eau.

11. Produit au chocolat selon la revendication 10, dans lequel le nappage à faible teneur en matières grasses comprend 30 à 40 % d'eau, 52 à 62 % de sucre, 5 à 10 % de fécule de tapioca et 0,05 à 3 % de gomme hydrocolloïde.

12. Produit au chocolat selon la revendication 11, dans lequel la fécule de tapioca représente 6 à 8 % et la gomme hydrocolloïde est 0,15 à 0,25 de gélose.

13. Procédé pour améliorer les propriétés fonctionnelles de la poudre de cacao qui comprend les étapes consistant à :
former une suspension de 10 à 30 % de cacao, 15 à 75 % de sucre et 20 à 55 % de liquide aqueux, ledit sucre et liquide aqueux étant présents dans la suspension sous forme d'une solution sucrée ;
broyer les particules de cacao hydratées dans la suspension pour obtenir une granulométrie dans laquelle 100 % des particules sont comprises entre 0,1 et 20 microns, de manière à former une pâte de cacao ;
ladite pâte de cacao étant appropriée comme modificateur alimentaire pour un produit alimentaire au chocolat.

14. Procédé selon la revendication 13, dans lequel les particules de cacao hydratées ont une granulométrie moyenne de 2 à 7 micromètres.

15. Procédé pour la fabrication d'un produit alimentaire au chocolat, dans lequel une pâte de cacao préparée par un procédé selon la revendication 13 ou la revendication 14 est ajoutée au produit alimentaire au chocolat selon une quantité efficace pour modifier les propriétés fonctionnelles du produit alimentaire au chocolat.

16. Procédé selon la revendication 15, dans lequel la suspension contient 20 à 25 % de cacao, 40 à 50 % de sucre et 25 à 35 % de liquide aqueux et le produit alimentaire au chocolat est un nappage.

17. Procédé selon la revendication 16, dans lequel le nappage est un nappage à faible teneur en matières grasses contenant du sucre, de l'eau et un épaississant.

18. Procédé selon la revendication 17, dans lequel le nappage est un nappage à faible teneur en matières grasses contenant 25 à 50 % d'eau, 5 à 10 % d'amidon et 45 à 70 % de sucre.

19. Procédé selon la revendication 18, dans lequel le nappage à faible teneur en matières grasses comprend 0,05 à 0,3 % d'une gomme hydrocolloïde.

20. Procédé selon la revendication 19, dans lequel l'hydrocolloïde est la gélose.

21. Procédé selon l'une quelconque des revendications 16 à 20, dans lequel le nappage à faible teneur en matières grasses comprend 30 à 40 % d'eau, 52 à 62 % de sucre, 6 à 8 % de fécule de tapioca, 01,15 à 0,25 de gélose, 0,3 à 0,4 % de sel, 0,1 à 0,2 % de sorbate et un colorant.

22. Procédé de fabrication d'un nappage au chocolat sans matières grasses à 99 % comprenant les étapes consistant à :
dissoudre suffisamment de sucre dans de l'eau pour former une solution sucrée à 15 à 75 % ;
former une suspension contenant 1 partie (en poids) de poudre de cacao et 3 à 5 parties de solution sucrée, ladite suspension contenant 1 à 5 % de matières solides non grasses du lait ;
broyer la suspension de manière à obtenir une pâte de cacao ayant des particules de cacao hydratées dans laquelle 100 % des particules sont comprises ente 0,1 et 20 micromètres et ayant une activité aqueuse de 0,83 à 0,90 ;
fournir un mélange de nappage à faible teneur en matières grasses contenant 25 à 50 % d'eau, 45 à 70 % de sucre, 5 à 10 % d'amidon et 0,05 à 0,3 % de gélose ;
mélanger 1 partie de la pâte de cacao avec 1 à 3 parties dudit mélange de nappage pour obtenir un nappage contenant moins de 1 % de matières grasses, ledit nappage ayant une activité aqueuse d'environ 0,84 à 0,88.

23. Procédé selon la revendication 22, dans lequel les particules de cacao hydratées ont une granulométrie moyenne de 2 à 7 micromètres.

24. Procédé selon la revendication 22 ou la revendication 23, dans lequel la suspension à broyer à l'état humide comprend environ 2 % de matières solides de lait écrémé, environ 22 % de poudre de cacao, environ 45 % de sucre et environ 31 % d'eau ; la pâte de suspension broyée a une activité aqueuse d'environ 0,86, et le nappage à faible teneur en matières grasses comprend environ 35 % d'eau, environ 57 % de sucre, environ 7 % d'amidon, environ 0,2 % de gélose, environ 0,4 % de sel et environ 0,2 % de conservateur, ledit nappage ayant une activité aqueuse de 0,85 à 0,86.
